# EUROPÄISCHE PATENTANMELDUNG

(11) **EP 0 902 601 A2**
(43) Veröffentlichungstag der Anmeldung: **17.03.1999**
(21) Anmeldenummer: 98114378.7
(22) Anmeldetag: 31.07.1998
(51) Int. Cl.: H04R 1/10

(54) **Hörkapsel**

(30) Priorität: 10.09.1997 DE 19739637
(71) Anmelder: ROBERT BOSCH GMBH, 70442 Stuttgart (DE)
(72) Erfinder: Marckardt, Daniel, 38100 Braunschweig (DE); Lerchner, Henry, 31224 Peine (DE)

(57) **Zusammenfassung**

Es wird eine Hörkapsel (1) für Fernsprechendgeräte vorgeschlagen, die der vereinfachten Kontaktierung mit Gegenkontakten vorzugsweise einer Leiterplatte dient. Die Hörkapsel (1) umfaßt dabei ein vorzugsweise zylinderförmiges Gehäuse (5), in dem eine Spule (15) schwingfähig im Magnetfeld vorzugsweise eines Permanentmagneten gelagert ist. Die Spule (15) ist einerseits mit einer Membran (20) zur Tonerzeugung verbunden und andererseits über zwei Kontakte (25, 30) mit Gegenkontakten vorzugsweise einer Leiterplatte verbindbar. Die Kontakte (25, 30) sind elektrisch isoliert auf dem Gehäuse (5) angeordnet und federnd ausgebildet. Die Kontakte (25, 30) weisen eine Kontaktierungsfläche (35) auf, die über eine erste federnde Biegung (45) und ein Halteteil (50) mit einer zweiten Biegung (55) zur Kontaktierung mit den Gegenkontakten verbunden ist.

## Beschreibung

### Stand der Technik

Die Erfindung geht von einer Hörkapsel nach der Gattung des Hauptanspruchs aus.

Hörkapseln sind beispielsweise für Fernsprechendgeräte seit langem bekannt. Dabei befindet sich in der Hörmuschel des Handapparates eines Fernsprechendgerätes eine Hörkapsel zur akustischen Wiedergabe von aus dem Telekommunikationsnetz empfangenen Daten.

### Vorteile der Erfindung

Die erfindungsgemäße Hörkapsel mit den Merkmalen des Hauptanspruchs hat demgegenüber den Vorteil, daß die Hörkapsel einfach in eine Aufnahme der Hörmuschel des Handapparates eingelegt werden kann. Ein weiterer Arbeitsgang zur Kontaktierung der Hörkapsel mit Gegenkontakten, vorzugsweise einer Leiterplatte im Handapparat, beispielsweise ein Lötvorgang ist nicht erforderlich. Auf diese Weise wird die Montage der Hörkapsel in die Hörmuschel des Handapparates stark vereinfacht und erfordert weniger Zeit und Kosten.

Durch die in den Unteransprüchen aufgeführten Maßnahmen sind vorteilhafte Weiterbildungen und Verbesserungen der im Hauptanspruch angegebenen Hörkapsel möglich.

Vorteilhaft ist dabei, daß die Kontaktierungsfläche über eine erste federnde Biegung und ein Halteteil mit einer zweiten Biegung zur Kontaktierung mit den Gegenkontakten verbunden ist. Ein solch einfacher Aufbau der federnden Kontakte erfordert nur wenig Aufwand und Kosten bei der Herstellung.

Vorteilhaft ist weiterhin, daß das Gehäuse eine mittig angeordnete vorzugsweise kreiszylinderförmige Hervorhebung aufweist und daß die Kontakte zumindest teilweise um die Hervorhebung gebogen sind. Auf diese Weise ist eine äußerst kompakte und platzsparende Bauform der Hörkapsel gegeben.

Vorteilhaft ist außerdem, daß die zweite Biegung jeweils eine hervorgehobene Kontaktfläche zur Kontaktierung mit den Gegenkontakten aufweist. Die Kontaktierung mit den Gegenkontakten wird somit durch die hervorgehobene Kontaktfläche zusätzlich unterstützt, so daß Kontaktverlust vermieden wird.

Vorteilhaft ist weiterhin, daß die Kontakte in Einbuchtungen des Isolierkörpers geführt sind. Auf diese Weise befinden sich die Kontakte innerhalb des Bauraumes der Hörkapsel, so daß kein zusätzlicher Platz durch die federnden Kontakte benötigt wird.

Vorteilhaft ist es auch, daß die Kontakte im unbetätigten Zustand über den Isolierkörper und die Hervorhebung des Magneten hinausragen. Auf diese Weise wird die Kontaktgabe mit den Gegenkontakten verbessert, da bei eingebauter Hörkapsel die Kontakte mit einer größeren Andruckkraft auf die Gegenkontakte drücken und somit Kontaktverlust vermieden wird.

### Zeichnung

Ein Ausführungsbeispiel der Erfindung ist in der Zeichnung dargestellt und in der nachfolgenden Beschreibung näher erläutert. Es zeigen Figur 1 eine Ansicht einer erfindungsgemäßen Hörkapsel von oben, Figur 2 eine Ansicht der erfindungsgemäßen Hörkapsel von unten, Figur 3 einen Querschnitt durch die erfindungsgemäße Hörkapsel und Figur 4 einen Querschnitt durch einen federnden Kontakt.

### Beschreibung des Ausführungsbeispiels

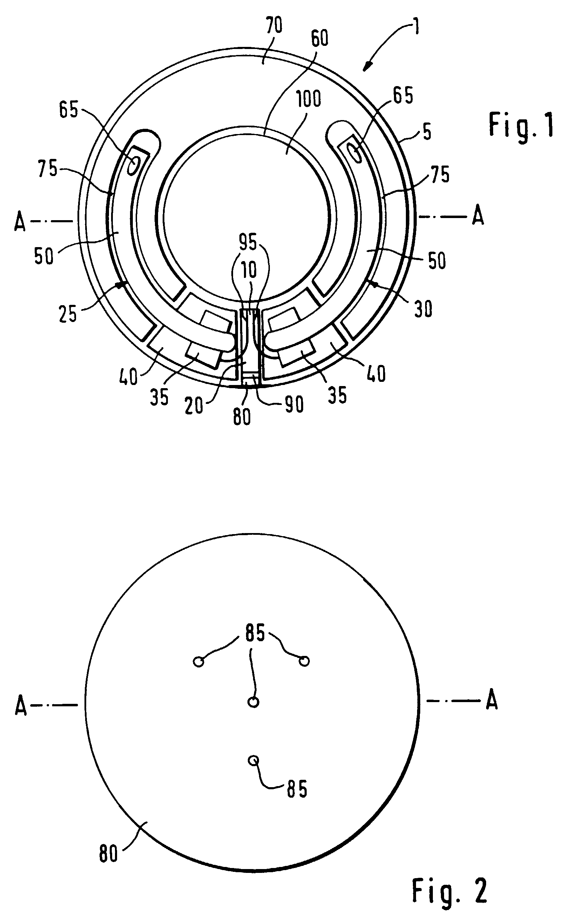

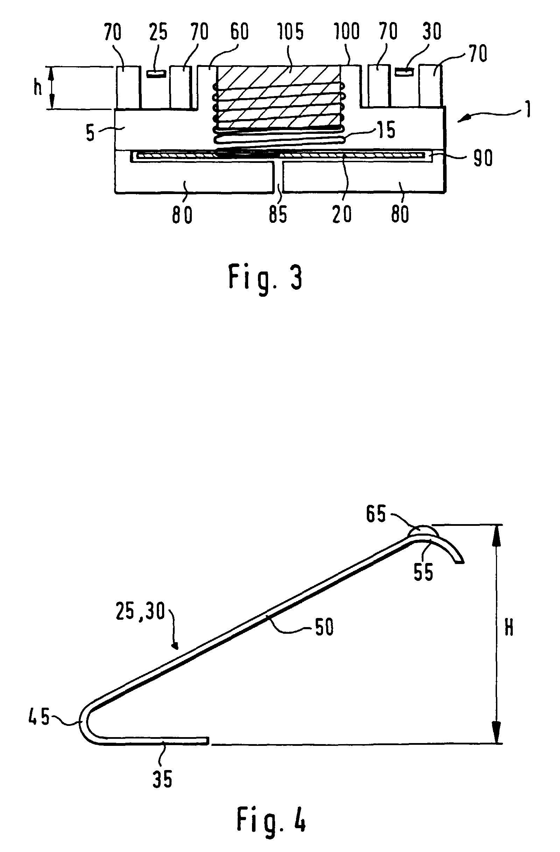

In Figur 1 kennzeichnet 1 eine Hörkapsel, wie sie beispielsweise in einer entsprechenden Aufnahme einer Hörmuschel eines Handapparates eines Fernsprechendgerätes untergebracht ist. Die Hörkapsel 1 umfaßt dabei ein im Innern hohles kreisscheibenförmiges bzw. zylinderförmiges Gehäuse 5, das eine mittig angeordnete im Innern ebenfalls hohle kreisscheibenförmige bzw. zylinderförmige Hervorhebung 60 mit kleinerem Radius der Grundfläche aufweist. Die Hervorhebung 60 ist von einem auf der durch die Hervorhebung 60 abgestuften Oberfläche des Gehäuses 5 aufliegenden und beispielsweise durch eine Klebeverbindung an dieser befestigten Isolierkörper 70 bis auf etwa eine Viertelkreislänge umschlossen. Etwa mittig zwischen den beiden Enden des Isolierkörpers 70 weist das Gehäuse 5 einen an der Hervorhebung 60 beginnenden, radial bis zum äußeren Rand des Magneten 5 verlaufenden schlitzförmigen Spalt 10 auf, der am äußeren Rand des Gehäuses 5 offen ist. Im Spalt 10 sind zwei Zuleitungen 95 angeordnet, die durch eine in Figur 1 nicht dargestellte Isoliermasse voneinander elektrisch isoliert sind. Die eine der beiden Zuleitungen 95 ist mit einer Kontaktierungsfläche 35 eines ersten Kontaktes 25 verbunden und die andere der beiden Zuleitungen 95 ist mit einer Kontaktierungsfläche 35 eines zweiten Kontaktes 30 verbunden. Die beiden Kontaktierungsflächen 35 sind dabei jeweils auf einer aus Leiterplattenmaterial, aus Kunststoff oder dergleichen gebildeten Isolierfläche 40 befestigt, die zwischen der Hervorhebung 60 und dem äußeren Rand des Gehäuses 5 an der durch die Hervorhebung 60 abgestuften Oberfläche des Gehäuses 5 an beiden Seiten des Spalts 10 angeordnet und beispielsweise durch eine Klebeverbindung mit dem Magneten 5 verbunden sind. Die Isolierflächen 40 reichen dabei jeweils vom Rand des Luftspalts 10 bis zum Beginn des Isolierkörpers 70. Sie dienen der elektrischen Isolierung der Kontaktierungsflächen 35 vom Gehäuse 5, falls dieses metallisch und nicht aus Kunststoff ausgeführt ist. Die beiden Zuleitungen 95 dienen der Zuführung einer Wechselspannung an eine im Innern des Gehäuses 5 gemäß Figur 3 angeordnete Spule 15 und sind entsprechend mit dieser Spule 15 verbunden. Im Innern des Gehäuses 5 ist an der kreisscheibenförmigen Deckfläche 100 der Hervorhebung 60 ein zylinderförmiger Permanentmagnet 105 befestigt, der ins Innere des Gehäuses 5 konzentrisch zum kreisförmigen Durchmesser des Gehäuses 5 und mit kleinerem Durchmesser als die Hervorhebung 60 hineinragt. Die Spule ist dabei zumindest teilweise um den Permanentmagneten 105 herumgewickelt, wobei sie durch eine in Figur 3 nicht dargestellte Isolierschicht vom Permanentmagneten 105 elektrisch isoliert sind. Der Abstand zwischen dem Permanentmagneten 105 und der Begrenzung des Gehäuses 5 ist dabei so groß gewählt, daß auch eine Berührung der um den Permanentmagneten 105 gewickelten Spule 15 mit der Gehäusebegrenzung ausgeschlossen wird. Dies kann zusätzlich durch eine in Figur 3 ebenfalls nicht dargestellte, im Innern die Begrenzung des Gehäuses 5 abgedeckte Isolierschicht zusätzlich sichergestellt werden. Zur Verdeutlichung der Umwicklung des Permanentmagneten 105 durch die Spule 15 ist für die Spule 15 in Figur 3, die einen Schnitt A-A gemäß Figur 1 darstellt, von dieser Schnittdarstellung abgewichen worden. Bei metallischer Ausführung des Gehäuses 5 wird ein Nichteisenmetall verwendet, um das Magnetfeld des Permanentmagneten 105 nicht zu beeinflussen. Die Spule 15 ist an der der Hervorhebung 60 abgewandten Unterseite des Gehäuses 5 mit einer Membran 20 verbunden. Die Membran 20 ist dabei schwingungsfähig in einer Aufnahme 90 einer an der Unterseite des Gehäuses 5 angeordneten Metallplatte 80, wie auch Figur 3 zu entnehmen ist, gelagert, und dient der Tonerzeugung durch vom Telekommunikationsnetz übertragene Signale. Statt einer Metallplatte 80 kann auch eine Platte aus Kunststoff oder sonst geeignetem Material verwendet werden. An den den Isolierflächen 40 zugewandten Enden des Isolierkörpers 70 weist dieser jeweils etwa mittig eine die Hervorhebung 60 teilweise umschließende ringsegmentförmige Einbuchtung 75 in Form eines Schlitzes auf. Das Ringsegment hat dabei jeweils etwa die Länge eines Viertelkreises. Die ringsegmentförmigen Einbuchtungen 75 des Isolierkörpers 70 dienen dabei der Aufnahme des ersten bzw. des zweiten Kontaktes 25, 30. Der Isolierkörper 70 isoliert dabei die Kontakte 25, 30 elektrisch vom gegebenenfalls metallischen Gehäuse 5. Dabei sind die Kontaktierungsflächen 35 der beiden Kontakte 25, 30 jeweils mit einem Halteteil 50 verbunden, das ebenfalls ringförmig gebogen und in der jeweiligen Einbuchtung 75 nahezu bis zum Ende der jeweiligen Einbuchtung 75 geführt ist. Dort weist das Halteteil 50 jeweils eine hervorgehobene Kontaktfläche 65 zur Kontaktierung mit Gegenkontakten beispielsweise einer im Handapparat angeordneten Leiterplatte auf.

In Figur 4 ist der Querschnitt eines Kontaktes 25, 30 dargestellt. Dabei ist die Kontaktierungsfläche 35 über eine erste federnde Biegung 45 und das im Querschnitt geradlinige Halteteil 50 mit einer zweiten Biegung 55 zur Kontaktierung mit den Gegenkontakten verbunden. Dabei weist die zweite Biegung 55 jeweils die hervorgehobene Kontaktfläche 65 zur verbesserten Kontaktierung mit den Gegenkontakten auf. Die Höhe H des Kontaktes 25, 30 gemäß Figur 4 ist dabei größer als die Höhe h der Hervorhebung 60 des Gehäuses 5 gemäß Figur 3, wobei der Kontakt 25, 30 in Figur 4 nicht maßstäblich eingezeichnet ist. Auf diese Weise ragen die Kontakte 25, 30 im unbetätigten Zustand über den Isolierkörper 70 und die Hervorhebung 60 des Gehäuses 5 hinaus.

In Figur 2 ist die der Hervorhebung 60 des Gehäuses 5 gegenüberliegende Unterseite der Hörkapsel 1 dargestellt. Sie wird durch die Metallplatte 80 gebildet, in der vier Schallaustrittslöcher 85 angebracht sind. Die vier Schallaustrittslöcher 85 befinden sich dabei etwa im mittleren Bereich der Metallplatte 80, wobei eines der Schallaustrittslöcher 85 etwa im Zentrum der Metallplatte 80 angeordnet ist. Die Schallaustrittslöcher 85 dienen dabei der Ausbreitung der durch die Membran 20 erzeugten Töne.

In Figur 1 und in Figur 2 ist jeweils eine Schnittlinie A-A dargestellt, die senkrecht zum Spalt 10 durch das Zentrum der Hörkapsel 1 verläuft. Bildet man entlang dieser Schnittlinie A-A einen Querschnitt durch die Hörkapsel 1, so erhält man die Darstellung gemäß Figur 3. In Figur 3 ist zu erkennen, daß die Höhe des Isolierkörpers 70 in etwa der Höhe h der Hervorhebung 60 des Gehäuses 5 entspricht. Bei der gewählten Schnittlinie A-A haben die Kontakte 25, 30 die obere Begrenzung der Hörkapsel 1 nahezu erreicht, wobei Figur 3 die Kontakte 25, 30 im unbetätigten Zustand zeigt. Das Ende der Kontakte 25, 30 mit der hervorgehobenen Kontaktfläche 65 ragt dabei jeweils über den Isolierkörper 70 und die Hervorhebung 60 des Magneten 5 hinaus. Da die Schnittlinie A-A durch das Zentrum der Hörkapsel 1 verläuft, ist in Figur 3 auch das zentral gelegene Schallaustrittsloch 85 der Metallplatte 80 dargestellt, das zusammen mit den anderen Schallaustrittslöchern 85 den Schallaustritt der von der in der Aufnahme 90 gelagerten Membran 20 erzeugten Töne ermöglicht.

Die erfindungsgemäße Hörkapsel kann auf einfache Weise in die dafür vorgesehene Aufnahme der Hörmuschel des Handapparates des Fernsprechendgerätes eingelegt werden. Wird anschließend die Leiterplatte mit den Gegenkontakten in den Handapparat eingelegt, so werden die Kontakte 25, 30 durch die Gegenkontakte betätigt und maximal bis zur oberen Begrenzungsfläche der Hörkapsel 1 bzw. der Hervorhebung 60 und dem Isolierkörper 70 niedergedrückt. Die Andruckkraft ist daher durch die Höhe h der Hervorhebung 60 bzw. des Isolierkörpers 70 definiert. Die Kontakte 25, 30 können nur bis zur oberen Begrenzung des Isolierkörpers 70 bzw. der Hervorhebung 60 niedergedrückt werden. Die Federkraft zur Kontaktierung wird dabei durch die erste federnde Biegung 45 bewirkt.

Durch die vom Telekommunikationsnetz über die Gegenkontakte zur Spule 15 übertragenen Signale wird an die Spule 15 eine Wechselspannung angelegt, so daß die Spule 15 im Magnetfeld des Permanentmagneten 105 und die mit ihr verbundene Membran 20 in der Aufnahme 90 der am Außenrand der der Hervorhebung 60 des Gehäuses 5 abgewandten Seite befestigten Metallplatte 80 schwingen und dadurch Töne erzeugt werden, die über die Schallaustrittslöcher 85 nach außen weitergeleitet werden.

Anstelle der zylinderförmigen Bauart des Gehäuses 5 und/oder der Hervorhebung 60 ist auch eine quaderförmige Bauart oder dergleichen denkbar.

Das Magnetfeld zur Erregung der Spule 15 kann auch durch andere, dem Fachmann geläufige Maßnahmen, beispielsweise durch einen Elektromagneten oder dergleichen realisiert werden.

## Patentansprüche

1. Hörkapsel (1) für Fernsprechendgeräte, dadurch gekennzeichnet, daß ein vorzugsweise zylinderförmiges Gehäuse (5) vorgesehen ist, in dem eine Spule (15) schwingfähig im Magnetfeld vorzugsweise eines Permanentmagneten gelagert ist, daß die Spule (15) einerseits mit einer Membran (20) zur Tonerzeugung verbunden ist, daß die Spule (15) andererseits über zwei Kontakte (25, 30) mit Gegenkontakten vorzugsweise einer Leiterplatte verbindbar ist, daß die Kontakte (25, 30) elektrisch isoliert auf dem Gehäuse (5) angeordnet sind und daß die Kontakte (25, 30) federnd ausgebildet sind.

2. Hörkapsel (1) nach Anspruch 1, dadurch gekennzeichnet, daß die Kontakte (25, 30) eine Kontaktierungsfläche (35) aufweisen, die auf einer vorzugsweise aus Leiterplattenmaterial gebildeten Isolierfläche (40) an der Oberfläche des Gehäuses (5) angeordnet sind und daß die Kontaktierungsfläche (35) über eine erste federnde Biegung (45) und ein Halteteil (50) mit einer zweiten Biegung (55) zur Kontaktierung mit den Gegenkontakten verbunden ist.

3. Hörkapsel (1) nach Anspruch 1 oder 2, dadurch gekennzeichnet, daß das Gehäuse (5) eine mittig angeordnete vorzugsweise kreisscheibenförmige Hervorhebung (60) aufweist und daß die Kontakte (25, 30) zumindest teilweise um die Hervorhebung (60) gebogen sind.

4. Hörkapsel (1) nach Anspruch 1, 2 oder 3, dadurch gekennzeichnet, daß die zweite Biegung (55) jeweils eine hervorgehobene Kontaktfläche (65) zur Kontaktierung mit den Gegenkontakten aufweist.

5. Hörkapsel (1) nach einem der vorherigen Ansprüche, dadurch gekennzeichnet, daß um die Hervorhebung (60) des Gehäuses (5) zumindest teilweise ein Isolierkörper (70) geführt ist.

6. Hörkapsel (1) nach Anspruch 5, dadurch gekennzeichnet, daß die Kontakte (25, 30) in Einbuchtungen (75) des Isolierkörpers (70) geführt sind.

7. Hörkapsel (1) nach Anspruch 5 oder 6, dadurch gekennzeichnet, daß die Kontakte (25, 30) im unbetätigten Zustand über den Isolierkörper (70) und die Hervorhebung (60) des Gehäuses (5) hinausragen.

8. Hörkapsel (1) nach einem der vorherigen Ansprüche, dadurch gekennzeichnet, daß die Membran (20) an der der Hervorhebung (60) abgewandten Seite des Gehäuses (5) angeordnet ist.

9. Hörkapsel (1) nach einem der vorherigen Ansprüche, dadurch gekennzeichnet, daß die Membran (20) in einer Aufnahme (90) einer Platte (80), vorzugsweise einer Metallplatte, am Gehäuse (5) angeordnet ist und daß die Platte (80) Schallaustrittslöcher (85) aufweist.
